# FASCICULE DE BREVET EUROPEEN

(11) **EP 2 634 224 B1**
(45) Date de publication et mention de la délivrance du brevet: **25.06.2014**
(21) Numéro de dépôt: 13157244.8
(22) Date de dépôt: 28.02.2013
(51) Int. Cl.: C09D 5/16

(54) **Utilisation d'un vernis biosource comme système de protection anti-graffitis**
Verwendung eines biobasierten Lacks als Graffitischutzsystem
Use of a biosourced varnish as anti-graffiti protection system

(30) Priorité: 29.02.2012 FR 1251834
(43) Date de publication de la demande: 04.09.2013
(73) Titulaire: GM Agri, 45600 Villemurlin (FR); D.V.I. Labo, 27300 Bernay (FR)
(72) Inventeur: Messant, Gérard, 94100 SAINT-MAUR-DES-FOSSES (FR); Viez, Francis, 27300 SAINT-AUBIN-LE-VERTUEUX (FR)
(74) Mandataire: Schmidt, Martin Peter

(56) Documents cités:
- FR-A1- 2 951 730
- US-A1- 2010 233 146

## Description

### Domaine technique de l'invention

La présente invention concerne un traitement facilitant le nettoyage d'un revêtement pour enlever des souillures tenaces sur des supports solides pouvant être des plus divers, notamment sur des supports minéraux, des supports métalliques, des supports en bois, des supports synthétiques, qu'ils soient bruts, crépis ou peints. L'invention concerne plus particulièrement un traitement anti-graffitis. En effet, même si le phénomène des « graffitis » n'est pas nouveau, il représente un problème sérieux de dégradation, aussi bien pour les bâtiments historiques, les bâtiments et ouvrages publics, les bâtiments résidentiels, les bâtiments commerciaux, que pour les espaces publics (gares, passages, ponts) et les véhicules de transports en commun, ou bien même pour tout autre objet. Outre leur nuisance esthétique, ces dégradations engendrent des dépenses importantes afin d'y remédier.

### Etat de la technique

On connaît de nombreux traitements permettant d'éliminer des marques de peinture ou des souillures, tels que des graffitis, d'une surface solide. Certains de ces traitements sont préventifs car ils sont effectués avant l'apparition des graffitis. Ainsi, lorsqu'un graffiti apparaît sur la surface d'un support prétraité, cette surface peut être nettoyée, éventuellement, à l'aide d'un agent de détachement approprié : le traitement du support réalisé au préalable favorise l'élimination du graffiti. D'autres traitements sont curatifs, c'est-à-dire ils permettent, à l'aide d'un agent et d'un procédé appropriés, d'enlever le graffiti sans endommager la surface sous-jacente.

D'une manière générale, les systèmes anti-graffitis préventifs se présentent sous la forme d'un ou plusieurs produits, appelés ici « produit pour revêtement », appliqués sur la surface à protéger et qui forment un revêtement solide qui est appelé ici « revêtement anti-graffiti » ou « revêtement de protection ». Ces systèmes peuvent être classés en trois groupes :
- les systèmes non permanents ou sacrificiels, sous la forme de revêtements qui, lors de l'enlèvement des graffitis, sont enlevés en même temps ;
- les systèmes semi-permanents, sous la forme de revêtements dont une sous-couche est permanente et une couche supérieure est sacrificielle ;
- les systèmes permanents, se présentant sous forme de revêtements qui font obstacle à la migration des différents pigments et colorants présents dans les graffitis, dans le support, et qui facilitent l'effacement des graffitis par un agent et procédé adaptés.

Pour ces systèmes, on connaît de nombreuses compositions pour former des revêtements anti-graffitis qui sont peu satisfaisantes car l'enlèvement du revêtement anti-graffitis est difficile, laborieux et coûteux, et le nettoyage nécessite l'utilisation de produits issus de la pétrochimie, de solvants organiques qui peuvent non seulement affecter l'environnement, mais également la santé humaine.

En effet, il est souhaitable que ni le produit pour le revêtement, ni le revêtement de protection lui-même ne renferme ou ne dégage de produits toxiques pour l'environnement, et soit de préférence biodégradable (tout en présentant une durée de vie suffisante une fois appliqué sur la surface à protéger), car ces produits pour revêtements, ces revêtements ou au moins leurs constituants ou leurs produits de dégradation se retrouveront tôt ou tard dans l'environnement. Cela est le cas en particulier de nombreux vernis préventifs contre les graffitis, qui sont en général enlevés à l'aide d'un produit liquide qui les dissout et qui finira par s'évacuer soit dans le système d'évacuation des eaux usées soit dans la nature. Des formulations de peinture anti-graffitis contenant des polymères bio-dégradables sont décrites dans le brevet FR 2 862 310 (Roquette Frères). Cependant, on souhaiterait également que le revêtement soit basé sur des produits d'origine biosourcée. On entend par « produit d'origine biosourcée », un produit constitué en totalité ou en partie de produits dont les atomes de carbone sont d'origine renouvelable.

La présente invention répond à ce besoin en proposant l'utilisation d'un vernis préventif contre les graffitis, ledit vernis étant basé sur des composants organiques ou résines biosourcés, c'est-à-dire disponibles sous la forme de produits non toxiques naturels non fossiles ou pouvant être synthétisés aisément en partant de produits naturels non fossiles, et biodégradables, dont la dispersion se fait dans une base aqueuse, qui dégage peu de composés organiques volatiles (COV), et qui peut être enlevée par aspersion et rinçage avec un agent de détachement liquide, qui est lui-même biodégradable, non toxique et basé sur des produits biosourcés.

L'invention concerne aussi un procédé de traitement préventif contre les graffitis sur un support par l'application d'un vernis biosourcé sur la surface à protéger, et un procédé de nettoyage de ladite surface par un agent de détachement liquide qui est lui aussi biodégradable et biosourcé.

### Objets de l'invention

Selon l'invention, le problème est résolu par l'utilisation d'un « produit liquide pour former un revêtement solide » (un tel produit étant appelé ici « vernis ») comprenant :
- 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15 ;
- éventuellement des additifs et/ou charges ;
- de l'eau quantum satis ;
pour former sur la surface d'un support un revêtement solide qui la protège contre les graffitis, ledit revêtement solide pouvant être nettoyé ou enlevé à l'aide d'un agent de détachement approprié.

De préférence, les constituants organiques dudit vernis sont à au moins 97 % massiques, et de préférence à au moins 98 % massiques, biosourcés.

Dans un mode de réalisation particulier, ledit vernis contient en outre au moins une charge minérale et/ou organique. Si des charges minérales et/ou organiques sont présentes, leur teneur avantageusement ne dépasse pas 30 % massiques. Les charges minérales et/ou organiques sont avantageusement choisies dans le groupe constitué par le carbonate de calcium, le silico aluminate de potassium (talc), la silice, l'amidon.

Ledit vernis peut encore comprendre des additifs fonctionnels, notamment 0,1 à 1 % en masse d'un épaississant, de préférence de l'éther de cellulose ou de la gomme de xanthane et/ou 0,1 à 1 % en masse d'un agent biocide pour la protection en pot, de préférence d'origine végétale, et/ou 0,1 à 1,5 % en masse d'un agent mouillant, de préférence du polyphosphate ou polyphosphonate de sodium, et/ou 0,1 à 1 % en masse d'au moins un agent siccatif, de préférence un sel organique ou organométallique de fer, et/ou 0,05 à 0,5 % en masse d'un agent antimousse d'origine biosourcée.

Egalement à titre d'additif, ledit vernis contient avantageusement un agent émulsionnant, à raison de 0,5 % à 5 % en masse, qui peut être avantageusement choisi dans le groupe formé par la gomme arabique, les amidons modifiés, les protéines d'origine animale, la β-cyclodextrine.

Cette utilisation dudit vernis forme le premier objet de l'invention.

Un autre objet de l'invention est l'utilisation d'un agent de détachement pour enlever le revêtement solide formé par le vernis selon l'invention, ledit agent de détachement n'étant ni toxique ni nocif pour l'environnement. Ledit agent de détachement, qui est apte à enlever et détacher le revêtement formé par le vernis après son application et séchage, comprend au moins un agent tensioactif non ionique, et présente un pH compris entre 3 et 6. L'agent tensioactif non ionique peut être de préférence un alkyl-xyloside, et encore plus préférentiellement un alkyl-xyloside dans lequel l'alkyle est en C₄ à C₆.

Dans un autre mode de réalisation, on utilise avantageusement un mélange comportant au moins un alkyl-xyloside avec un radical alkyle en C₄, C₅ ou C₆ (au moins 20 % massiques) ainsi qu'au moins un alkyl-glycoside en C₈ à C₁₂, à raison de moins de 5 % massiques.

Dans encore un autre mode de réalisation, l'agent de détachement comprend avantageusment à titre de surfactant non-ionique le diméthylisosorbide (pouvant être obtenu à partir de l'isosorbide), à raison d'au moins 15 % massiques et de préférence d'au moins 20 % massiques.

Avantageusment, la composition de l'agent de détachement utilisé selon l'invention peut encore comporter un acide α-hydroxylé. La teneur en acide α-hydroxylé est avantageusement inférieure ou égale à 5% massiques, et préférentiellement comprise entre 0,1 et 5 % massiques.

La composition de l'agent de détachement utilisé selon l'invention peut encore comporter un alcool, de préférence l'éthanol ou l'isopropanol, et sa quantité est avantageusement inférieure ou égale à 5 % massiques, et préférentiellement comprise entre 0,1 et 5 % massiques.

Avantageusement, les constituants organiques dudit agent de détachement sont choisis de manière à ce qu'ils puissent être préparés à partir de produits d'origine biosourcée. Ainsi, on préfère un mode de réalisation dans lequel ses constituants organiques sont à au moins 97 % massiques, et de préférence à au moins 98% massiques, d'origine biosourcée.

L'invention a aussi pour objet un procédé pour protéger la surface d'un support contre les graffitis par la formation d'un revêtement solide pouvant être nettoyé ou enlevé à l'aide d'un agent de détachement approprié, dans lequel :
- on approvisionne un vernis comprenant (i) 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15, (ii) éventuellement des addititifs et/ou charges, (iii) de l'eau quantum satis ;
- on applique ledit vernis sur la surface dudit support, avantageusement à raison de 5 à 15 m²/l ;
- on laisse sécher ledit vernis pour former un revêtement solide.

Le vernis selon l'invention atteint ses propriétés de protection optimale à partir de deux jours de séchage à l'air libre à température ambiante.

L'invention a aussi pour objet un procédé pour nettoyer un support traité par le procédé selon l'invention, ledit support traité pouvant comporter des graffitis à sa surface, ledit procédé comprenant une étape de nettoyage de la surface du revêtement solide formé par ledit vernis, à l'aide d'un agent de détachement tel que décrit ci-dessus.

Enfin, un dernier objet de l'invention est un kit comprenant (a) le vernis selon l'invention pour former sur la surface d'un support un revêtement solide pour la protéger contre les graffitis et (b) un agent de détachement tel que décrit ci-dessus, à savoir un agent de détachement comprenant au moins un agent tensioactif non-ionique et présentant un pH compris entre 3 et 6 permettant d'enlever le revêtement formé par le vernis, sachant que ledit agent tensioactif non ionique est de préférence un alkyl-xyloside, dans lequel l'alkyle est de préférence en C₄ à C₆, ou le diméthylisosorbide, et les constituants organiques dudit agent de détachement sont choisis de manière à ce qu'ils puissent être préparés à partir de produits d'origine biosourcée, et de préférence sont à au moins 97% massiques, et de préférence à au moins 98% massiques, d'origine biosourcée.

Le vernis contenu dans ce kit peut comprendre toutes les caractéristiques techniques mentionnées ci-dessus ou décrites ci-dessous pour le vernis qui fait l'objet des utilisations et des procédés selon l'invention.

L'agent de détachement contenu dans ce kit peut comprendre également toutes les caractéristiques techniques mentionnées ci-dessus ou décrites ci-dessous pour l'agent de détachement qui fait l'objet des utilisations et des procédés selon l'invention.

### Description détaillée

On entend par « graffiti » toute inscription ou dessin tracé à la main (par exemple à l'aide de marqueurs, stylos et pinceaux) ou au moyen de peintures aérosols ou par tout autre procédé sur des supports solides. Du point de vue chimique, les graffitis sont composés essentiellement de pigments et/ou colorants, d'un liant et éventuellement de résidus de solvant. Des liants utilisés fréquemment pour les peintures aérosols sont les résines acryliques, les résines polyuréthanes, les résines polyesters, les résines époxydiques, les résines alkydes, les huiles siccatives ou semi siccatives, polymérisées ou non, et les résines de silicone.

On entend par « produit biosourcé » ou d'origine « biosourcée » tout produit d'origine végétale ou animale qui n'est pas d'origine fossile et qui ne contient pas de produit organique d'origine fossile, sachant que le terme « produit d'origine fossile » signifie tout produit organique issu du pétrole ou du charbon ou des dérivés du pétrole ou charbon. Un produit d'origine biosourcée peut être distingué d'un produit similaire synthétisé à partir de matières premières fossiles par les méthodes décrites dans la norme ASTM D6866.

Par « indice de polydispersité », nous entendons le rapport Iₚ de la masse molaire moyenne en poids Mₚ sur la masse molaire moyenne en nombre Mₙ. Les paramètres Mₚ, Mₙ et Iₚ sont obtenus après chromatographie dite d'exclusion stérique d'une solution de la résine dans un solvant approprié après son passage sur une colonne de gel. Le solvant peut être le chloroforme. La concentration peut être de l'ordre de 0,2 M.

Par « siccativité » d'une huile, nous entendons l'aptitude d'une huile à sécher en présence de l'oxygène de l'air. Cette aptitude augmente avec le nombre de liaisons insaturées présentes dans la structure de l'huile ou de l'acide gras. Typiquement, une huile contenant des acides gras mono-insaturés présente un caractère semi-siccatif, alors qu'une huile contenant des acides gras poly-insaturés présente un caractère siccatif.

On entend ici par « agent émulsionnant » (ou « émulsifiant ») tout produit ou mélange de produits permettant ou favorisant la formation d'une émulsion.

Sauf indication contraire, les pourcentages caractérisant une composition sont des pourcentages massiques.

La composition du vernis préventif contre les graffitis utilisé selon l'invention comprend une résine alkyde, synthétisée à partir de produits d'origine biosourcée et notamment à partir de produits végétaux, et présentant :
- un indice de polydispersité Iₚ compris entre 1 et 20 (de préférence entre 5 et 15) ;
- une masse molaire moyenne en poids Mₚ comprise entre 3 000 g/mol et 100 000 g/mol (de préférence entre 3 000 g/mol et 10 000 g/mol) ;
- un indice d'acide compris entre 5 et 35, de préférence entre 5 et 25, et encore plus préférentiellement entre 5 et 15 ;
- une longueur moyenne théorique en huile comprise entre 20 % et 60%.

Si la résine alkyde présente une masse molaire Mₚ supérieure à 100 000 g/mol, il est très difficile, voire impossible de l'émulsionner dans l'eau. Si la résine alkyde présente une masse molaire Mₚ inférieure à 3 000 g/mol, elle conduit à un séchage très lent du vernis qui la contient sous forme d'émulsion aqueuse.

Si la résine alkyde présente un indice de polydispersité Iₚ supérieur à 20, on observe qu'il est difficile de l'émulsionner parfaitement dans l'eau, et cela introduit une inhomogénéité des propriétés du revêtement de protection formé à partir d'un vernis qui contient une telle résine alkyde sous forme d'émulsion aqueuse.

Une telle résine alkyde peut être synthétisée par polycondensation de produits de départ comprenant au moins un polyol, au moins un polyacide et au moins une huile et/ou un acide gras, l'huile étant choisie parmi les huiles végétales siccatives et/ou semi-siccatives, et l'acide gras étant choisi parmi les acides gras entrant dans la composition desdites huiles végétales siccatives et/ou semi-siccatives. Par ailleurs, le polyacide et le polyol sont (avantageusement) des produits d'origine biosourcée et disponibles dans le commerce.

Ces produits de départ peuvent être mélangés dynamiquement en continu à une température avantageusement comprise entre 180°C et 220°C jusqu'à la formation de la résine alkyde modifiée.

En particulier, les produits de départ peuvent comporter au mois une huile siccative choisie dans le groupe constitué par l'huile de lin, l'huile de bois de chine, l'huile oiticica, et/ou peuvent comporter au moins une huile semi-siccative choisie dans le groupe constitué par l'huile de soja, l'huile de tournesol, l'huile de carthame, l'huile de pépin de raisin, l'huile de carnauba, l'huile de calendula. Toutes ces huiles sont des produits d'origine biosourcée.

L'acide gras entrant dans la composition d'une huile semi-siccative peut avantageusement être choisi dans le groupe constitué par l'acide oléique, l'acide linoléique et l'acide linolénique.

Le polyacide peut avantageusement être choisi parmi les oligomères d'acide gras végétal, l'acide succinique et l'acide adipique.

Lors de la préparation de la résine, on peut contrôler la masse molaire et l'indice de polydispersité par ajout d'un catalyseur bloqueur de chaîne ; ce catalyseur peut être un polyacide carboxylique, par exemple le poly(acide lactique), l'acide lactique ou l'acide gluconique.

On peut préparer une émulsion aqueuse de cette résine alkyde, par exemple avec un agent émulsionnant d'origine fossile ou, de préférence, d'origine biosourcée. Une proportion d'agent émulsionnant comprise entre 1 % et 6 % massiques (par rapport à la masse totale de l'émulsion) peut convenir. L'agent émulsionnant peut avantageusement être choisi dans le groupe constitué par la gomme arabique, les amidons modifiés (notamment l'amidon substitué par un groupement octényl succinate), la caséine, la gélatine et la β-cyclodextrine, qui sont tous des produits d'origine biosourcée.

Dans le cadre de la présente invention, on peut notamment utiliser les résines et émulsions décrites dans les demandes de brevet WO 2011/051612 et FR 2 951 730 (Centre National de la Recherche Scientifique et D.V.I. Labo).

Selon la présente invention, la résine alkyde entre dans la composition du vernis préventif dans une proportion comprise entre environ 10 % et 50 % d'extrait sec. A titre d'exemple, on peut utiliser pour la préparation du vernis préventif selon l'invention environ 15 % à 45 % massiques, et de préférence entre 15 % et 40 %, d'une émulsion aqueuse de résine avec un extrait sec d'environ 50 %. L'extrait sec de l'émulsion utilisée peut cependant être différent, par exemple compris entre 30 % et 70 % (de préférence entre 35 % et 65 %), et peut prendre les valeurs de 40 %,45 %, 55 %, 60 % ou toutes les valeurs intermédiaires.

La composition du vernis préventif utilisé selon l'invention peut comprendre également un agent mouillant, de préférence du polyphosphonate de sodium, qui assure la bonne dispersion des pigments et charges ainsi que la stabilité du produit en pot. Une teneur comprise entre 0,3 et 1,5 % massiques convient, de préférence entre 0,5 % et 1 %.

Avantageusement, la composition du vernis utilisé selon l'invention peut comprendre également un agent anti-mousse d'origine biosourcée, pour éviter la formation de mousse lors de la fabrication et lors de l'application du vernis. Sa teneur est de préférence comprise entre 0,05 % et 1,2 % massiques. Le produit connu sous la marque commerciale AV1425 ® d'Aqualon ou le produit sous la marque commerciale BYK 1740 ® de BYK Chemie, biosourcé à 98% au minimum, peut convenir.

La composition du vernis utilisé selon l'invention comporte avantageusement un biocide, à savoir un produit qui déploie une activité fongicide et bactéricide. On peut utiliser un produit agréé pour l'usage cosmétique qui est de ce fait non-toxique, ou un produit pour vernis ; à ce titre, le produit connu sous la marque commerciale Tergal ® 723K ou Acticide ® MBX peut convenir. Typiquement, on utilise une concentration comprise entre 0,05% et 0,5%.

Dans mode de réalisation particulier, la composition du vernis utilisé selon l'invention ne comprend pas de charges minérales et/ou organiques. L'absence desdites charges permet d'obtenir une résine alkyde translucide, et donc permet d'obtenir un revêtement transparent qui respecte la couleur de fond du support.

Dans un autre mode de réalisation particulier, la composition du vernis utilisé selon l'invention peut comprendre des charges minérales et/ou organiques. Les charges utilisées dans la composition du vernis peuvent être d'origine biosourcée. La présence de ces charges dans la composition du vernis permet, par exemple, d'adapter la brillance et la blancheur du vernis. Avantageusement, la teneur en charges minérales et/ou organiques ne dépasse pas 30 % massiques. Ces charges peuvent être des pigments, d'origine minérale ou synthétique.

A titre de charges d'origine naturelle minérale, on peut notamment citer le carbonate de calcium ou le silico aluminate de potassium (talc), la silice ou l'amidon.

On peut également ajouter un agent épaississant pour adapter la rhéologie du vernis, notamment un éther de cellulose, tel que l'hydoxyéthylcellulose, ou de la gomme de xanthane, pour éviter la sédimentation du vernis ; une teneur comprise entre 0,1 % et 0,5 % massiques convient en général.

On peut également ajouter au moins un siccatif, qui accélère le séchage du vernis. Il peut s'agir par exemple d'un produit comprenant un sel organométallique, de préférence à base de fer (qui est un métal de transition non-toxique). On peut utiliser à ce titre le produit Borchi ® Oxy-Coat commercialisé par la société OMG Borchers, en une teneur comprise entre 0,4 et 1 % massiques.

Pour améliorer la dureté du revêtement solide, on peut également ajouter dans la compositon du vernis :
- de 1 à 30 % en masse d'une résine acrylique d'origine biosourcée en émulsion aqueuse, ladite résine acrylique biosourcée présentant un indice d'acide compris entre 15 et 20, et présentant de préférence un extrait sec compris entre 45 et 55%.
- de 1 à 30 % en masse d'une résine uréthanisée en émulsion aqueuse, ladite résine uréthanisée présentant une masse molaire Mₚ comprise entre 5 000 et 50 000 g/mol, un indice de polydispersité Iₚ compris entre 1 et 20, une longueur d'huile comprise entre 45 et 50%, et présentant de préférence un extrait sec compris entre 45 et 55%. Une telle résine uréthanisée peut être synthétisée par exemple par polycondensation de produits de départ comprenant au moins un polyol, de préférence d'origine biosourcée, et un diisocyanate, de préférence l'isophorone diisocyanate (IPDI) (n° CAS 4098-71-9). Avantageusement, la teneur en isocyanate dans la résine uréthanisée ne doit pas dépasser 3 % massiques.
- de 1 à 30 % en masse d'une résine de colophane.

Ces trois ajouts peuvent se cumuler mais leur teneur totale ne doit pas dépasser 30 %, et de préférence 20 %, de la masse du vernis.

Enfin, la composition du vernis utilisé selon l'invention comporte de l'eau, *quantum satis*, et typiquement à raison d'environ 15 à 30 % massiques, et de préférence d'environ 19 à 25 % massiques.

Un paramètre important pour le vernis utilisé selon l'invention est l'indice d'acide de la résine alkyde, qui doit être généralement compris entre 5 et 35, de préférence entre 5 et 25, et encore plus préférentiellement entre 5 et 15. En effet, si l'indice d'acide de la résine utilisée dans le vernis est trop faible, elle ne pourra plus être dissoute dans des conditions acceptables par l'agent de détachement.

A titre d'exemple, on peut préparer un vernis avec la composition suivante (en pourcentages massiques) :
- Résine alkyde bio-sourcée VRT 98 : 21,6
- Caséine : 2,0
- Eau de ville : 50,2
- Lessive de soude 30 % : 0,1
- Polyphosphonate de sodium lodiperse 30 : 1,2
- Antimousse AV1425: 0,2
- CaCO₃ polygloss 90 : 24
- Ether cellulosique HR250 : 0,3
- Borchi ® Oxy-Coat 1101 : 0,1
- Acticide ® MBX (Biocide protection en pot) 0,3

Selon un mode de réalisation, le vernis peut être fabriqué par le procédé suivant. La première étape du procédé consiste à mélanger les agents mouillants et les agents anti-mousse dans l'eau. Puis, on ajoute la résine alkyde bio-sourcée avec les agents de réticulations, une partie des agents épaississants et le biocide. Enfin, on règle la viscosité de la solution par ajout d'eau et d'une autre partie des agents épaississants.

Selon un autre mode de réalisation, on ajoute des charges minérales et/ou organiques dans la première étape du procédé de la formation du vernis, en mélangeant les charges avec les agents mouillants et les agents anti-mousse dans l'eau.

Le vernis peut alors être utilisé comme revêtement préventif contre les graffitis.

Le vernis anti-graffitis selon l'invention peut être appliqué par toute technique appropriée, par exemple à l'aide de pinceaux, de rouleaux, de pistolet pneumatique ou air-less.

Le procédé permettant la protection de la surface d'un support contre les graffitis par la formation d'un revêtement solide est le suivant :
- on approvisionne un vernis comprenant (i) 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15 ; (ii) éventuellement des additifs et/ou charges ; (iii) de l'eau quantum satis ;
- on applique ledit vernis sur la surface dudit support, avantageusement à raison de 5 à 15 m²/l ;
- on laisse sécher ledit vernis pour former un revêtement solide.

Le vernis utilisé selon l'invention forme un revêtement de protection solide qui peut être nettoyé ou enlevé, partiellement ou totalement, à l'aide d'un agent de détachement approprié, qui comprend au moins un surfactant non-ionique. Dans un mode de réalisation avantageux, l'agent de détachement comprend à titre de surfactant non-ionique au moins un alkyl-xyloside, à raison d'au moins 15 % massiques et de préférence d'au moins 20 % massiques. Le radical alkyle est de préférence en C₄, C₅ ou C₆. On préfère le butyl-xyloside et surtout l'amyl-xyloside (n ° CAS 444-850-4). Ces alkyl-xylosides peuvent être préparés à partir de biomasse, notamment à partir de sucres lignocellulosiques.

Dans un mode de réalisation avantageux, on utilise un mélange comportant au moins un alkyl-xyloside avec un radical alkyle en C₄, C₅ ou C₆ (au moins 20 % massiques), et de préférence du butyl- et/ou amyl-xyloside, ainsi qu'au moins un alkyl-glycoside en C₈ à C₁₂, à raison de moins de 5 % massiques, et de préférence des décyl-glycosides (n ° CAS 58846-77-8). Ces derniers peuvent être obtenus par réaction du glucose (pouvant être obtenu à partir d'amidon de maïs) avec du décanol (pouvant être obtenu à partir de noix de coco).

Dans un autre mode de réalisation avantageux, l'agent de détachement comprend à titre de surfactant non-ionique le diméthylisosorbide (n° CAS 5306-85-4) (pouvant être obtenu à partir de l'isosorbide), à raison d'au moins 15 % massiques et de préférence d'au moins 20 % massiques.

La composition de l'agent de détachement utilisé selon l'invention peut encore comporter un acide α-hydroxylé, de préférence l'acide hydroxy-acétique (n° CAS 79-14-1), qui peut également être obtenu à partir de produits naturels (extraits de canne à sucre, de betteraves ou de raisin). La teneur en acide α-hydroxylé est avantageusement inférieure ou égale à 5% massiques, et préférentiellement comprise entre 0,1 et 5 % massiques.

La composition de l'agent de détachement utilisé selon l'invention peut encore comporter un alcool, de préférence l'éthanol ou l'isopropanol, et sa quantité est avantageusement inférieure ou égale à 5 % massiques, et préférentiellement comprise entre 0,1 et 5 % massiques.

Ainsi, l'agent de détachement utilisé selon l'invention peut être réalisé de manière à ce qu'au moins 97 %, voir au moins 98 % massiques de ses constituants organiques soient d'origine biosourcée. Par ailleurs, l'agent de détachement est biodégradable.

L'agent de détachement comporte également de l'eau, *quantum satis.* Une proportion massique d'au moins 60 %, et de préférence d'au moins 70 %, est préférée. L'agent de détachement a un caractère acide, et son pH peut être ajusté en ajoutant le cas échéant une base faible ou forte (par exemple de la lessive de soude à 30%, par exemple à raison de 0,5 % à 2 % massiques). Avantageusement, le pH de l'agent de détachement se situe entre 3 et 6, et encore plus avantageusement entre 4 et 6. On peut utiliser un pH plus bas, mais cela n'est pas avantageux car on souhaite éviter de laisser s'échapper des acides forts, même biodégradables, dans l'environnement.

Il est alors possible d'utiliser un agent de détachement selon l'invention lors de l'apparition d'un graffiti sur la surface d'un support traité par l'utilisation du vernis selon l'invention. Le procédé pour nettoyer la surface du support consiste en une étape de nettoyage de la surface du revêtement solide à l'aide d'un agent de détachement selon l'invention qui comprend un tensioactif non-ionique et qui présente un pH compris entre 3 et 6, suivi d'une étape de rinçage du support à l'eau.

L'agent de détachement peut être appliqué par toute technique appropriée, par exemple par aspersion, pulvérisation, ou au rouleau. On le laisse agir pendant quelques temps, en fonction notamment de la température afin de permettre sa pénétration dans le vernis, puis on rince la surface du support à l'eau.

Avantageusement, ladite étape de nettoyage est effectuée avec un agent de détachement qui comprend un tensioactif non-ionique et qui présente un pH compris entre 3 et 6, ladite étape de nettoyage étant effectuée à une température d'eau comprise entre 10 et 80°C, de préférence entre 30 et 80°C, et sous une pression d'agent de détachement supérieure à 20 bars.

Le procédé de nettoyage selon l'invention conduit à la dissolution au moins partielle du revêtement de protection, cela dépend notamment de l'intensité du nettoyage (concentration, température, pression d'application de l'agent de détachement), de la nature chimique du graffiti et du support. Dans beaucoup de cas, il sera utile d'appliquer un nouveau revêtement de protection après la mise en oeuvre du procédé de nettoyage selon l'invention.

L'invention présente de nombreux avantages. L'utilisation du vernis tel que décrit évite de mettre en oeuvre des produits nocifs ou dangereux, dégageant des composés organiques volatiles (COV), ou nécessitant des précautions d'usage particuliers. La même remarque s'applique à l'agent de détachement. Ainsi, le vernis et l'agent de détachement peuvent être utilisés à l'intérieur, dans des espaces confinés et mal ventilés, ou encore à l'extérieur.

Les supports sur lesquels le vernis est appliqué peuvent être des plus variés : il peut s'agir notamment de supports minéraux tels que de la pierre blanche calcaire, de la pierre grise grès, de pierre granite, de briques, d'enduits en ciment, de verre ou de béton. Les supports peuvent être métalliques tels que l'acier brut, l'acier peint, l'acier galvanisé ou l'aluminium anodisé. Enfin, les supports peuvent être en matière végétale telle que du sapin, du chêne, du pin, ou tout autre type de bois, aggloméré ou contreplaqué.

Ainsi, le nettoyage ou l'enlèvement du revêtement solide à l'aide de l'agent de détachement selon l'invention ne nécessite aucune précaution particulière, tel que le recueillement des liquides de nettoyage, car ni le vernis qui forme le revêtement solide, ni le revêtement solide dissout, ni l'agent de détachement ne sont toxiques ou nocifs pour l'environnement ; en particulier, leur biodégradabilité est très élevée. Le fait que et le vernis et l'agent de détachement peuvent être biosourcés à plus que 97% massiques contribue à améliorer leur écobilan, et rend le prix des matières premières indépendant du prix du pétrole.

Enfin, le vernis selon l'invention présente comme avantage le respect de la matité de la teinte du support à protéger : translucide et satiné. Il possède de plus une bonne durabilité, notamment une bonne résistance aux intempéries avec néanmoins une bonne perméabilité à la vapeur d'eau permettant ainsi au support de « respirer ».

## Revendications

1. Utilisation d'un vernis comprenant :
- 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15 ;
- éventuellement des additifs et/ou charges ;
- de l'eau quantum satis ;
pour former sur la surface d'un support un revêtement solide pour la protéger contre les graffitis, ledit revêtement solide pouvant être nettoyé ou enlevé facilement à l'aide d'un agent de détachement approprié.

2. Utilisation selon la revendication 1, **caractérisée en ce que** les constituants organiques dudit vernis sont à au moins 97% massiques, et de préférence à au moins 98% massiques, d'origine biosourcée.

3. Utilisation selon la revendication 1 ou 2, **caractérisée en ce que** ledit vernis comprend en outre au moins une charge minérale et/ou organique, de préférence sélectionnée dans le groupe formé par le carbonate de calcium, le silico aluminate de potassium (talc), la silice, l'amidon.

4. Utilisation selon la revendication 3, **caractérisée en ce que** la teneur en charges minérales et/ou organiques dudit vernis ne dépasse pas 30 % en masse.

5. Utilisation selon l'une quelconque des revendications 1 à 4, **caractérisée en ce que** ledit vernis comprend en outre un ou plusieurs des constituants suivants :
- 0,1 à 1,5 % en masse d'un agent mouillant, de préférence du polyphosphate de sodium ;
- 0,1 à 1 % en masse d'un épaississant, de préférence l'éther de cellulose ou de la gomme de xanthane ;
- 0,1 à 1 % en masse d'un agent biocide, de préférence d'origine végétale ;
- 0,05 à 0,5 % en masse d'agent antimousse d'origine biosourcée ;
- 0,1 à 1 % en masse d'un agent siccatif, de préférence à base de sel organique de fer.

6. Utilisation d'un agent de détachement comprenant un agent tensioactif non-ionique et présentant un pH compris entre 3 et 6 pour nettoyer ou enlever le revêtement solide formé par l'utilisation selon l'une des revendications 1 à 5.

7. Utilisation d'un agent de détachement selon la revendication 6, **caractérisé en ce que** les constituants organiques dudit agent de détachement sont à au moins 97% massiques, et de préférence à au moins 98% massiques, d'origine biosourcée.

8. Utilisation d'un agent de détachement selon la revendication 6 ou 7, ledit agent tensioactif non-ionique étant de préférence un alkyl-xyloside, dans lequel l'alkyle est en C₄ à C₆.

9. Utilisation d'un agent de détachement selon la revendication 6 ou 7, ledit agent tensio-actif non-ionique étant un mélange comportant au moins un alkyl-xyloside avec un radical alkyle en C₄, C₅ ou C₆, et de préférence du butyl- et/ou amyl-xyloside, ainsi qu'au moins un alkyl-glycoside en C₈ à C₁₂, et de préférence un décyl-glycoside.

10. Utilisation d'un agent de détachement selon la revendication 6 ou 7, ledit agent tensioactif non-ionique étant de préférence le diméthylisosorbide, à raison d'au moins 15% massiques et de préférence d'au moins 20% massiques.

11. Procédé pour protéger la surface d'un support contre les graffitis par la formation d'un revêtement solide pouvant être nettoyé ou enlevé facilement à l'aide d'un agent de détachement approprié, dans lequel :
- on approvisionne un vernis comprenant (i) 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15 ; (ii) éventuellement des additifs et/ou charges ; (iii) de l'eau quantum satis ;
- on applique ledit vernis sur la surface dudit support ;
- on laisse sécher ledit vernis pour former un revêtement solide.

12. Procédé pour nettoyer un support traité par le procédé selon la revendication 11, ledit procédé comprenant une étape de nettoyage de la surface du revêtement solide à l'aide d'un agent de détachement qui comprend un tensioactif non-ionique et qui présente un pH compris entre 3 et 6, suivi d'une étape de rinçage du support à l'eau.

13. Procédé selon la revendication 12 **caractérisé en ce que** ladite étape de nettoyage est effectué à une température d'eau comprise entre 10 et 80°C, de préférence entre 30 et 80°C, et sous une pression d'agent de détachement supérieure à 20 bars.

14. Kit comprenant (a) un vernis comprenant (i) 10 à 50 % en masse d'une résine alkyde d'origine biosourcée en émulsion aqueuse, ladite résine alkyde présentant une masse molaire Mₚ comprise entre 3 000 g/mol et 100 000 g/mol, de préférence entre 3 000 et 10 000 g/mol, un indice de polydispersité Iₚ compris entre 1 et 20, de préférence entre 5 et 15, une longueur d'huile comprise entre 20 et 60 %, et un indice d'acide compris entre 5 et 35, de préférence entre 5 et 25, et encore plus préférentiellement entre 5 et 15 ; (ii) éventuellement des additifs et/ou charges ; (iii) de l'eau quantum satis pour former sur la surface d'un support un revêtement pour la protéger contre les graffitis et (b) un agent de détachement comportant un agent tensioactif non-ionique et présentant un pH compris entre 3 et 6 pour enlever le revêtement formé par ledit vernis.

15. Kit selon la revendication 14, **caractérisé en ce que** ledit agent de détachement comprend au moins un agent tensioactif non ionique, de préférence un alkyle xyloside, dans lequel l'alkyle est en C₄ à C₆, ou le diméthylisosorbide.

## Patentansprüche

1. Verwendung eines Lacks, umfassend:
- 10 bis 50 Massenprozent eines Alkydharzes biologischen Ursprungs in wässriger Emulsion, wobei das Alkydharz eine Molmasse Mₚ aufweist, die zwischen 3000 g/mol und 100000 g/mol liegt, vorzugsweise zwischen 3000 und 10000 g/mol, einen Polydispersionsindex lₚ, der zwischen 1 und 20 liegt, vorzugsweise zwischen 5 und 15, einen Ölgehalt, der zwischen 20 und 60 % liegt, und eine Säurezahl die zwischen 5 und 35 liegt, vorzugsweise zwischen 5 und 25, und noch bevorzugter zwischen 5 und 15;
- eventuell Zusatzmittel und/oder Füllstoffe;
- Wasser quantum satis;
um auf der Oberfläche eines Trägers eine feste Beschichtung zu bilden, um sie vor Graffiti zu schützen, wobei die feste Beschichtung leicht mit Hilfe eines geeigneten Entfernungsmittels gereinigt oder entfernt werden kann.

2. Verwendung nach Anspruch 1, **dadurch gekennzeichnet, dass** die organischen Bestandteile des Lacks zu mindestens 97 Massenprozent und vorzugsweise zu mindestens 98 Massenprozent biologischen Ursprungs sind.

3. Verwendung nach Anspruch 1 oder 2, **dadurch gekennzeichnet, dass** der Lack außerdem mindestens einen mineralischen und/oder organischen Füllstoff umfasst, vorzugsweise ausgewählt aus der Gruppe, gebildet aus Calciumcarbonat, Kaliumsilicoaluminat (Talk), Siliziumdioxid, Stärke.

4. Verwendung nach Anspruch 3, **dadurch gekennzeichnet, dass** der Gehalt an mineralischen und/oder organischen Füllstoffen des Lacks 30 Massenprozent nicht übersteigt.

5. Verwendung nach einem der Ansprüche 1 bis 4, **dadurch gekennzeichnet, dass** der Lack außerdem einen oder mehrere der folgenden Bestandteile umfasst:
- 0,1 bis 1,5 Massenprozent eines Benetzungsmittels, vorzugsweise Natriumpolyphosphat;
- 0,1 bis 1 Massenprozent eines Verdickungsmittels, vorzugsweise Natriumpolyphosphat oder Xanthangummi;
- 0,1 bis 1 Massenprozent eines bioziden Mittels, vorzugsweise pflanzlichen Ursprungs;
- 0,05 bis 0,5 Massenprozent eines Entschäumungsmittels biologischen Ursprungs;
- 0,1 bis 1 Massenprozent eines Trocknungsmittels, vorzugsweise basierend auf einem organischen Eisensalz.

6. Verwendung eines Entfernungsmittels, umfassend ein nicht ionisches Tensid, und das einen pH-Wert der zwischen 3 und 6 aufweist, um die feste Beschichtung zu reinigen oder zu entfernen, die durch die Verwendung gemäß einem der Ansprüche 1 bis 5 gebildet wird.

7. Verwendung eines Entfernungsmittels nach Anspruch 6, **dadurch gekennzeichnet, dass** die organischen Bestandteile des Entfernungsmittels zu mindestens 97 Massenprozent und vorzugsweise zu mindestens 98 Massenprozent biologischen Ursprungs sind.

8. Verwendung eines Entfernungsmittels nach Anspruch 6 oder 7, wobei das nicht ionische Tensid vorzugsweise ein Alkylxylosid ist, in dem das Alkyl C₄ bis C₆ aufweist.

9. Verwendung eines Entfernungsmittels nach Anspruch 6 oder 7, wobei das nicht ionische Tensid eine Mischung ist, die mindestens ein Alkylxylosid mit einem Alkyl-Radikal mit C₄, C₅ oder C₆, und vorzugsweise Butyl- und/oder Amylxylosid, sowie mindestens ein Alkylglykosid mit C₈ bis C₁₂ und vorzugsweise ein Decylglykosid umfasst.

10. Verwendung eines Entfernungsmittels nach Anspruch 6 oder 7, wobei das nicht ionisches Tensid vorzugsweise Dimethylisosorbid, zu mindestens 15 Massenprozent und vorzugsweise zu mindestens 20 Massenprozent ist.

11. Verfahren zum Schutz der Oberfläche eines Trägers vor Graffiti durch die Bildung einer festen Beschichtung, die leicht mit Hilfe eines geeigneten Entfernungsmittels gereinige oder entfernt werden kann, wobei:
- ein Lack bereitgestellt wird, umfassend (i) 10 bis 50 Massenprozent eines Alkydharzes biologischen Ursprungs in wässriger Emulsion, wobei das Alkydharz eine Molmasse Mₚ aufweist, die zwischen 3000 g/mol und 100000 g/mol liegt, vorzugsweise zwischen 3000 und 10000 g/mol, einen Polydispersionsindex lp, der zwischen 1 und 20 liegt, vorzugsweise zwischen 5 und 15, einen Ölgehalt, der zwischen 20 und 60 % liegt, und eine Säurezahl, die zwischen 5 und 35 liegt, vorzugsweise zwischen 5 und 25, und noch bevorzugter zwischen 5 und 15; (ii) eventuell Zusatzmittel und/oder Füllstoffe; (iii) Wasser *quantum satis*;
- der Lack auf die Oberfläche des Trägers aufgebracht wird;
- der Lack trocknen gelassen wird, um eine feste Beschichtung zu bilden.

12. Verfahren zur Reinigung eines Trägers, behandelt durch das Verfahren nach Anspruch 11, wobei das verfahren einen Schritt des Reinigens der Oberfläche der festen Beschichtung mit Hilfe eines Entfernungsmittels umfasst, das ein nicht ionisches Tensid umfasst, und das einen pH-Wert aufweist, der zwischen 3 und 6 liegt, gefolgt von einem Schritt des Spülens des Trägers mit Wasser.

13. Verfahren nach Anspruch 12, **dadurch gekennzeichnet, dass** Schritt des Reinigens bei einer Wassertemperatur durchgeführt wird, die zwischen 10 und 80 °C liegt, vorzugsweise zwischen 30 und 80, °C und bei einem Druck des Entfernungsmittels, der höher alls 20 Bar ist.

14. Kit, umfassend (a) einen Lack, umfassend (i) 10 bis 50 Massenprozent eines Alkydharzes biologischen Ursprungs in wässriger Emulsion, wobei das Alkydharz eine Molmasse Mₚ aufweist, die zwischen 3000 g/mol und 100000 g/mol liegt, vorzugsweise zwischen 3000 und 10000 g/mol, einen Polydispersionsindex lₚ, der zwischen 1 und 20 liegt, vorzugsweise zwischen 5 und 15, einen Ölgehalt, der zwischen 20 und 60 % liegt, und eine Säurezahl, die zwischen 5 und 35 liegt, vorzugsweise zwischen 5 und 25, und noch bevorzugter zwischen 5 und 15; (ii) eventuell Zusatzmittel und/oder Füllstoffe; (iii) Wasser quantum satis; um auf der Oberfläche eines Trägers eine Beschichtung zu bildes, um sie vor Graffiti zu schützen, und (b) ein Entfernungsmittel, das ein nicht ionisches Tensid umfasst, und das einen pH-Wert aufweist, der zwischen 3 und 6 liegt, um die Beschichtung, gebildet durch den Lack, zu entfernen.

15. Verfahren nach Anspruch 14, **dadurch gekennzeichnet, dass** das Entfernungsmittel mindestens ein nicht ionisches Tensid umfasst, vorzugsweise ein Alkylxylosid, in dem das Alkyl C₄ bis C₆ aufweist, oder Dimethylisosorbid.

## Claims

1. Use of a varnish comprising:
- 10 to 50% by mass of an alkyd resin of biosourced origin in an aqueous emulsion, said alkyd resin having a molar mass Mₚ between 3000 g/mol and 100,000 g/mol, preferably between 3000 and 10,000 g/mol, a polydispersity index Iₚ between 1 and 20, preferably between 5 and 15, an oil length between 20 and 60%, and an acid index between 5 and 35, preferably between 5 and 25, and even more preferentially between 5 and 15;
- optionally additives and/or fillers;
- water quantum satis;
to form on the surface of a substrate a solid coating for protecting same against graffiti, said solid coating being suitable for being cleaned or removed easily using a suitable stain removal agent.

2. Use according to claim 1, **characterised in that** the organic constituents of said varnish are at least 97% by mass, and preferably at least 98% by mass, of biosourced origin.

3. Use according to claim 1 or 2, **characterised in that** said varnish further comprises at least one mineral and/or organic filler, preferably selected in the group formed by calcium carbonate, potassium silicoaluminate (talc), silica, starch.

4. Use according to claim 3, **characterised in that** the mineral and/or organic filler content of said varnish does not not exceed 30% by mass.

5. Use according to any of claims 1 to 4, **characterised in that** said varnish further comprises one or a plurality of the following constituents:
- 0.1 to 1.5% by mass of a damping agent, preferably sodium polyphosphate;
- 0.1 to 1% by mass of a thickener, preferably cellulose ether or xanthan gum;
- 0.1 to 1% by mass of a biocidal agent, preferably of plant origin;
- 0.05 to 0.5% by mass of an antifoaming agent of biosourced origin;
- 0.1 to 1% by mass of a drying agent, preferably based on organic iron salt.

6. Use of a stain removal agent comprising a non-ionic surfactant and having a pH between 3 and 6 for cleaning or removing the solid coating formed by the use according to any of claims 1 to 5.

7. Use or a stain removal agent according to claim 6, **characterised in that** the organic constituents of said stain removal agent are at least 97% by mass, and preferably at least 98% by mass, of biosourced origin.

8. Use of a stain removal according to claim 6 or 7, said non-ionic surfactant being preferably an alkyl-xyloside, wherein the alkyl is C₄ to C₆.

9. Use of a stain removal agent according to claim 6 or 7, said non-ionic surfactant being a mixture comprising at least one alkyl-xyloside with a C₄, C₅ or C₆ alkyl radical, and preferably butyl- and/or amyl-xyloside, and at least one C₈ to C₁₂ alkyl-glycoside, and preferably one decyl-glycoside.

10. Use of a stain removal agent according to claim 6 or 7, said non-ionic surfactant being preferably dimethylisosorbide, at a rate of at least 15% by mass and preferably at least 20% by mass.

11. Method for protecting the surface of a substrate against graffiti by forming a solid coating suitable for being cleaned or removed easily using a suitable stain removal agent, wherein:
- a varnish is provided, comprising (i) 10 to 50% by mass of an alkyd resin of biosourced origin in an aqueous emulsion, said alkyd resin having a molar mass Mₚ between 3000 g/mol and 100,000 g/mol, preferably between 3000 and 10,000 g/mol, a polydispersity index Iₚ between 1 and 20, preferably between 5 and 15, an oil length between 20 and 60%, and an acid index between 5 and 35, preferably between 5 and 25, and even preferentially between 5 and 15; (ii) optionally additives and/or fillers; (iii) water quantum satis;
- said varnish is applied onto the surface of said substrate;
- said varnish is allowed to dry to form a solid coating.

12. Method for cleaning a substrate treated using the method according to claim 11, said method comprising a step for cleaning the surface of solid coating using a stain removal agent comprising a non-ionic surfactant and having a pH between 3 and 6, followed by a step for rinsing the substrate with water.

13. Method according to claim 12 **characterised in that** said cleaning step is performer at a water temperature between 10 and 80°C, preferably between 30 and 80°C, and at a stain removal agent pressure greater than 20 bar.

14. Kit comprising (a) a varnish comprising (i) 10 to 50% by mass of an alkyd resin of biosourced origin in an aqueous emulsion, said alkyd resin having a molar mass Mₚ between 3000 g/mol and 100,000 g/mol, preferably between 3000 and 10,000 g/mol, a polydispersity index Iₚ between 1 and 20, preferably between 5 and 15, an oil length between 20 and 60%, and an acid index between 5 and 35, preferably between 5 and 25, and even more preferentially between 5 and 15; (ii) optionally additives and/or fillers; (iii) water quantum satis to form on the surface of a substrate a coating for protecting same against graffiti and (b) a stain removal agent comprising a non-ionic surfactant and having a pH between 3 and 6 for removing the coating formed by said varnish.

15. Kit according to claim 14, **characterised in that** said stain removal agent comprises at least one non-ionic surfactant, preferably an alkyl xyloside, wherein the alkyl is C₄ to C₆, or dimethylisosorbide.
